# EUROPEAN PATENT APPLICATION

(11) **EP 4 703 904 A1**
(43) Date of publication of application: **04.03.2026**
(21) Application number: 24197185.2
(22) Date of filing: 29.08.2024
(51) Int. Cl.: G06F 16/332, G06F 16/9032

(54) **MULTI-STAGE KNOWLEDGE RETRIEVAL SYSTEM FOR MACHINE OPERATOR SUPPORT**

(71) Applicant: Siemens Aktiengesellschaft, 80333 München (DE)
(72) Inventor: Bayraktar, Ali Emir, 34476 Istanbul (TR); Carli, Tarik, 41455 Kocaeli (TR); Erman, Merve, 34887 Sancaktepe (TR); Heller, Rainer, 90542 Eckental (DE); Helvacioglu, Turgut, 34742 Kadikoy (TR); Jaremenko, Christian, 91080 Spardorf (DE)
(74) Representative: Siemens Patent Attorneys

(57) **Abstract**

The present disclosure provides a system and method for supporting a machine operator. The system comprises a large language model, a first vector database storing question/answer pairs, a second vector database storing embeddings of domain-specific documents, a graphical user interface for receiving queries from the machine operator and displaying responses, and a processor.

## Description

### Field Of Invention

This invention is related a multi-stage knowledge retrieval system for supporting machine operators using rated question/answer pairs and domain-specific documents.

### Background

Machine operators in industrial settings often face complex challenges that require quick access to relevant information and expert knowledge. Traditional methods of accessing this information, such as manually searching through printed manuals or contacting remote experts, can be time-consuming and inefficient. This can lead to prolonged downtime, reduced productivity, and increased costs for manufacturing operations.

The rapid advancement of artificial intelligence and natural language processing technologies has opened new possibilities for improving information retrieval and decision support systems. Large language models have demonstrated remarkable capabilities in understanding and generating human-like text across a wide range of domains. However, effectively applying these technologies in specialized industrial contexts presents unique challenges.

One key challenge is the need to combine general language understanding capabilities with domain-specific knowledge. Industrial environments often involve highly specialized terminology, processes, and equipment that may not be well-represented in general-purpose language models. Additionally, the critical nature of many industrial operations requires a high degree of accuracy and reliability in any automated support system.

Another challenge is the dynamic nature of industrial knowledge. As new equipment is installed, processes are updated, and operators gain experience, the relevant knowledge base is constantly evolving. Static documentation quickly becomes outdated, and there is a need for systems that can efficiently capture and utilize the latest insights and best practices.

Furthermore, industrial environments often have specific constraints related to data security, network connectivity, and hardware limitations. Support systems must be able to operate effectively within these constraints while still providing timely and relevant assistance to machine operators.

As industrial processes become increasingly complex and automated, there is a growing need for intelligent support systems that can bridge the gap between human operators and the vast amount of technical information required to maintain and troubleshoot modern machinery. Such systems have the potential to significantly enhance operator efficiency, reduce downtime, and improve overall manufacturing productivity.

Existing machine operator support systems face several technical challenges that limit their effectiveness in industrial settings. Traditional documentation-based approaches often struggle to keep pace with rapidly evolving industrial processes and equipment, resulting in outdated or incomplete information. Furthermore, these systems typically lack the ability to capture and leverage the practical knowledge gained by experienced operators over time. The static nature of conventional support tools also fails to address the dynamic and context-specific nature of many industrial problems. Additionally, current systems often require extensive manual searching or expert consultation, leading to prolonged downtime and reduced productivity. Many existing solutions rely on cloud-based services or internet connectivity, which may not be feasible in secure or isolated industrial environments. There is also a lack of effective mechanisms for continuously improving and refining the knowledge base based on real-world operator feedback and experiences. These technical limitations underscore the need for a more advanced, adaptive, and context-aware support system that can operate efficiently within the constraints of industrial settings while providing timely and relevant assistance to machine operators.

### Brief Description Of The Invention

An object of the present invention is to provide a system which comprises a first vector database for storing question/answer pairs as the primary source of information ensuring that machine operators receive the most relevant and highly-rated solutions to their queries and a second vector database that provides a comprehensive approach to information retrieval by allowing the system to offer both tried-and-tested solutions and newly generated responses based on relevant documentation, maximizing the chances of resolving operator queries efficiently.

Another object of the present invention is to provide a system which leverages the collective experience and knowledge of multiple operators, leading to more accurate and effective problem-solving.

Other object of the present invention is to provide a system which dynamically updates and expands its knowledge base through user feedback and explicit additions allowing for continuous improvement and adaptation to specific operational environments.

Yet another object of the present invention is to provide a system which ensures that the system remains up to date with the latest information and best practices, significantly enhancing its long-term utility and relevance.

Another object of the present invention is to provide a system and a method to operate without internet access.

Other object of the present invention is to provide an incorporation of a rating mechanism, including an impact rating feature which enables the system to prioritize and refine its knowledge base continuously.

### Brief Description Of Figures

Aspects of this disclosure will be best understood from the following description of specific embodiments when read in connection with the accompanying drawings.
Figure 1 is an exemplary flow diagram of the invention.
**Figure 2** shows an exemplary embodiment of the present invention.

### Detailed Description Of The Invention

A multi-stage knowledge retrieval machine operator system to assist machine operators in an industrial setting comprises:
a large language model;
a first vector database storing question/answer pairs,
a second vector database storing embeddings of domain-specific and/or a particular machine specific documents chunks,
a graphical user interface for receiving queries from the machine operator and displaying responses; and
a processor,
wherein the system is configured to
receive a query from the machine operator via the graphical user interface,
search the first vector database for similar question/answer pairs,
if a similar question/answer pair is found, provide the answer to the machine operator via the graphical user interface,
if no similar rated question/answer pair is found, conducting a similarity search in the second vector database for relevant document chunks,
generate a response using the large language model based on the relevant document chunks, and provide the generated response to the machine operator via the graphical user interface.

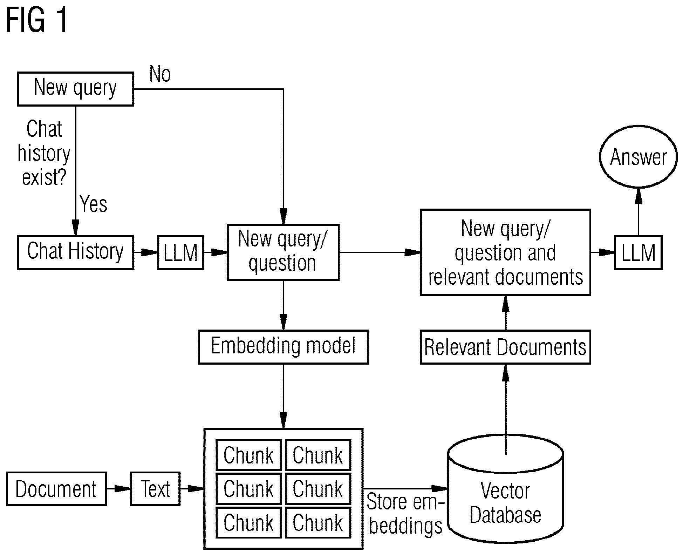

Referring to Fig. 1, the system utilizes a multi-stage knowledge retrieval process to provide timely and relevant responses to operator queries of the machine operator. The first vector database stores the question/answer pairs which are used to provide responses to operator queries preferably that have been previously rated as effective. These rated question/answer pairs contain previously generated responses to similar queries, which have been rated by operators based on their effectiveness. The second vector database stores the document chunks which are preprocessed domain documents that are split into chunks and then converted into embeddings and stored in the second vector database. The document chunks may be specific to the domain or a particular machine, allowing the system to provide tailored responses to operator queries. The LLM may be a standard model, such as LLama-2, and is used to generate responses to operator queries. The GLTI is used to receive queries from the machine operator and display responses. The processor executes the instructions upon the receipt of the query from the machine operator via the GLTI.

When a query from the machine operator is received, the system firstly conducts a search in the first vector database storing question/answer pairs for similar queries and provide corresponding answers. If no similar query is found, the system conducts a similarity search in the second vector database storing the domain-specific and or a particular machine specific document chunks and generates a new response using the large language model.

In a preferred embodiment, the system is configured to receive a rating or feedback for the provided answer or generated response from the machine operator via the graphical user interface. This feature allows the system to incorporate operator feedback or ratings into the knowledge base, thereby improving the relevance and accuracy of future responses. The rating or feedback may be used to update the first vector database, allowing the system to continuously refine its knowledge base based on operator feedback. This feedback mechanism may enable the system to improve its responses over time, enhancing its utility and effectiveness in supporting machine operators.

The system may operate without requiring internet access, making it suitable for use in secure operational technology environments with limited hardware requirements. This feature may make the system particularly suitable for use on the shop floor, where internet access may be limited or non-existent.

In a further embodiment, the system retrieves information from both the first and the second vector databases based on the optimized query if no similar question/answer pair is found the first vector database. This allows the system to combine the information from the domain-specific document chunks and the rated question/answer pairs to generate a comprehensive response to the operator's query. For example, the system uses information from a domain-specific document chunk to provide a detailed explanation of a machine component and uses a rated response from a similar query to provide a practical solution to the operator's problem. In this embodiment, the system prioritizes the retrieval of information from one vector database over the other. For instance, the operator is dealing with a common issue that has been previously addressed, the system may prioritize the retrieval of information from the first vector database, which stores rated question/answer pairs. Conversely, if the operator is dealing with a unique or complex issue, the system prioritizes the retrieval of information from the second vector database, which stores domain-specific document chunks. This dynamic prioritization allows the system to provide the most relevant and effective support to the operator in different situations.

In a preferred embodiment, the large language model is extended with specific domain knowledge through the use of vector embedding models which turns input text into vectors and are used for vector search in vector databases such as embedding 5 (E5), allowing the system to provide more accurate and relevant responses.

In a preferred embodiment, the users can dynamically add additional documents to the second vector database or question/answer pairs to the first vector database. This feature may enable users to customize the system with domain-specific knowledge. For example, a user may add a manual for a specific machine, or a document detailing a particular process to the second vector database and once added, these documents may be processed and stored in the second vector database, making the information contained within them available for use in generating responses to operator queries.

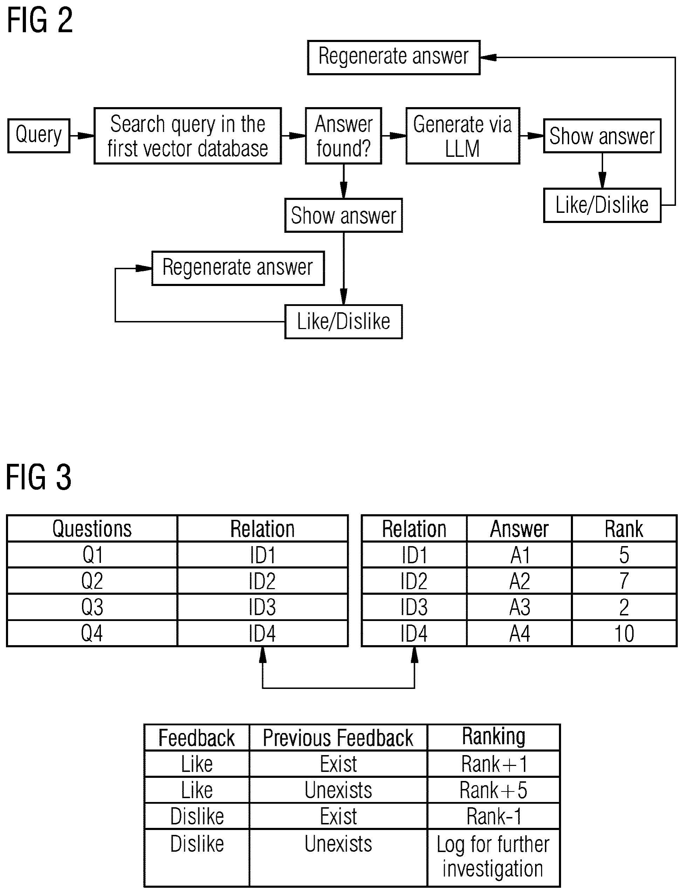

Preferably, referring to Fig.2, if a similarity search in the first vector database does not provide good results (not accepted/liked by the machine operator or poorly ranked by the machine operator), the machine operator can request a new generation from the system, or the system automatically generates new answers based on the information provided in the domain-specific documents stored in the second vector database. This two-stage approach allows the system to provide effective support to the operator, even in situations where a similar problem has not been encountered before. In this embodiment, the system may use the feedback or rating received from the operator to adjust the weighting of the rated answer in the second vector database. For example, if the machine operator rates a response highly, the system may increase the weighting of the associated question/answer pair, making it more likely to be retrieved in future queries. Conversely, if the operator rates a response poorly, the system may decrease the weighting of the associated question/answer pair, making it less likely to be retrieved in future queries. This dynamic weighting mechanism may allow the system to adapt to the operator's preferences and provide more relevant and effective responses over time.

Referring to Table 1, the system comprises a database which comprises a table of question identifiers and relation identifiers. This table stores the question identifiers and their corresponding relation identifiers. The processor conducts a search in this table for similar rated question/answer pairs upon receipt of a query from the machine operator via the graphical user interface.

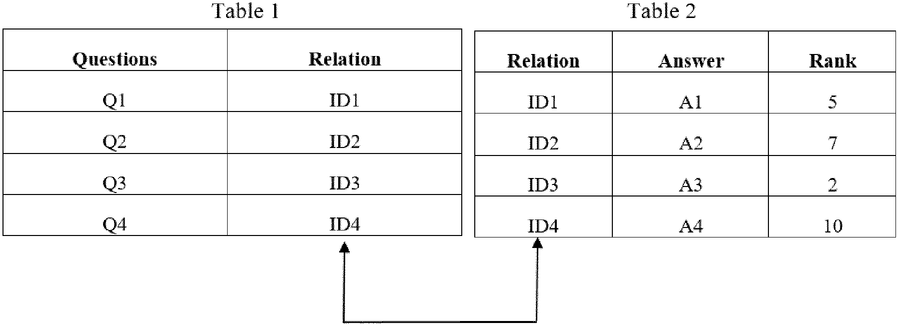

**Table 3**

| **Feedback** | **Previous Feedback** | **Ranking** |
|---|---|---|
| Like | Exist | Rank+1 |
| Like | Not exists | Rank+5 |
| Dislike | Exist | Rank -1 |
| Dislike | Not exists | Log for further investigation |

Preferably, referring to Table 2, the system comprises another table comprising relation identifiers along with their associated answers and numerical rank values. The relation identifiers allow the system to link questions with their corresponding answers and ranks, thereby facilitating the retrieval of relevant responses to operator queries. In this embodiment, the system is configured to update the table based on the received rating from the machine operator. This update may involve adjusting a rating of an existing similar question/answer pair based on the received rating. If the rating exceeds a predetermined threshold, the processor may store the query and the provided answer or generated response as a new rated question/answer pair in the first vector database. This feature allows the system to continuously refine its knowledge base based on operator feedback, thereby improving the relevance and accuracy of future responses.

In a preferred embodiment, referring to Table. 3, the system comprises a ruleset table that governs the system's behavior in response to user feedback. The ruleset defines rules for handling user feedback, such as incrementing or decrementing the rank of an existing record based on a "Like" or "Dislike" action from the user. In this embodiment, preferably, the ruleset includes an "extended rating" mechanism that acts as an impact rating, incrementing or decrementing the rating by a higher value (e.g., 5) or a lower value (e.g. -1) compared to the standard rating. For instance, if the answer is already ranked before as "like" from one machine operator and another machine operator "dislikes" the answer, the system updates the ranking of this question/answer pair by assigning -1 value to the ranking, or if an answer is not ranked before, and a machine operator is dislikes the answer for the first time, the system logs this question/answer pair for further investigation. This feature may allow the system to dynamically adjust the priority of responses based on operator feedback, thereby enhancing the system's ability to provide timely and relevant responses to operator queries.

Preferably, the system is used in other domains beyond machine operation support. For example, the system may be used in TIA hotline support, where it can use its specific domain knowledge to assist hotline operators in providing support to customers.

The system may be implemented in a cloud-based environment. This cloud-based implementation may allow the system to be hosted on a remote server and accessed by the operator through a web browser or other suitable interface. This cloud-based implementation may provide several advantages, such as increased scalability, improved accessibility, and reduced maintenance requirements. For example, by hosting the system in the cloud, it may be possible to easily scale the system to support a large number of operators or machines. Additionally, the operator may be able to access the system from any location with an internet connection, providing increased flexibility and convenience. For example, the system may be capable of leveraging a general cloud-based system, such as ChatGPT, as a fourth level of information retrieval. This feature may come into play when the local resources, such as the rated question/answer pairs in the first vector database and the document chunks in the second vector database, are exhausted. In such cases, the system may reach out to the general cloud-based system to provide more general information or advice in the context of the current query. This feature may provide the system with an additional layer of support, enhancing its ability to provide relevant responses to operator queries.

Present invention also provides a multi-stage knowledge retrieval machine operator method to assist machine operators in an industrial setting comprising the steps of:
receiving a query from a machine operator via a graphical user interface,
searching the first vector database for similar question/answer pairs by a processor,
if a similar rated question/answer pair is found, providing the answer to the machine operator via the graphical user interface,
if no similar rated question/answer pair is found, conducting a similarity search in the second vector database for relevant document chunks by the processor and
generating a response using the large language model based on the relevant document chunks, and providing the generated response to the machine operator via the graphical user interface.

In the method, the question/answer pairs which are used to provide responses to operator queries preferably that have been previously rated as effective are stored in the first vector database. The second vector database stores the document chunks which are preprocessed domain documents that are split into chunks and then converted into embeddings and stored in the second vector database. The processor executes the instructions upon the receipt of the query from the machine operator via the GLTI. When a query from the machine operator is received, a simple search is conducted in the first vector database. If no similar query is found, a similarity search is conducted in the second vector database and a new response using the large language model is generated.

In a preferred embodiment, the method comprises the step of receiving feedback or rating from the machine operator on the generated responses and update the vector databases based on this feedback or rating, allowing the method to continuously improve its performance.

In another preferred embodiment, the method updates the first vector database based on the feedback received from the machine operator. For example, after the method generates a response to a query, the machine operator may provide feedback on the effectiveness of the response. This feedback is then used to rate the question/answer pair associated with the response. The rated question/answer pair may then be stored in the first vector database preferably if the rating exceeds a predetermined threshold, allowing the system to learn from past interactions and improve its performance over time.

In the step of using large language model, the large language model may be extended with specific domain knowledge through the use of vector embedding models which turns input text into vectors and are used for vector search in vector databases such as embedding model 5 (E-5-base-v2), allowing the method to provide more accurate and relevant responses.

Preferably, referring to Fig. 2, if a similarity search in the second vector database does not provide good results (not accepted by the machine operator or poorly ranked by the machine operator), the machine operator can request a new generation, or the method automatically generates new answers based on the information provided in the domain-specific documents stored in the second vector database. In this embodiment, the feedback received from the operator can be used to adjust the weighting of the rated question/answer pairs in the second vector database. For example, if the machine operator rates a response highly, the weighting of the associated question/answer may increase, making it more likely to be retrieved in future queries. Conversely, if the operator rates a response poorly, the weighting of the associated question/answer pair is decreased, making it less likely to be retrieved in future queries. This dynamic weighting mechanism may allow the method to adapt to the operator's preferences and provide more relevant and effective responses over time.

Preferably, the method can be implemented in a cloud-based environment. This cloud-based implementation may allow the method to be hosted on a remote server and accessed by the operator through a web browser or other suitable interface. The operator may be able to access the method from any location with an internet connection, providing increased flexibility and convenience.

Preferably, referring to Fig. 2, if a similarity search in the second vector database does not provide good results (not accepted/liked by the machine operator or poorly ranked by the machine operator), the machine operator can request a new generation from the method, or the method automatically generates new answers based on the information provided in the domain-specific documents stored in the second vector database. This two-stage approach allows the method to provide effective support to the operator, even in situations where a similar problem has not been encountered before. In this embodiment, the method may use the feedback or rating received from the operator to adjust the weighting of the rated answer in the second vector database. For example, if the machine operator rates a response highly, the weighting of the associated question/answer pair is increased, making it more likely to be retrieved in future queries. Conversely, if the operator rates a response poorly, the weighting of the associated question/answer pair is decreased, making it less likely to be retrieved in future queries. This dynamic weighting mechanism may allow the method to adapt to the operator's preferences and provide more relevant and effective responses over time.

Referring to Table 1, the method comprises the step of conducting a search in another database including a table where question identifiers and relation identifiers are stored for similar rated question/answer pairs upon receipt of a query from the machine operator via the graphical user interface.

Preferably, referring to Table 2, in another table relation identifiers along with their associated answers and numerical rank values are stored. The relation identifiers allow the method to link questions with their corresponding answers and ranks, thereby facilitating the retrieval of relevant responses to operator queries. In this embodiment, the method updates the table based on the received rating from the machine operator. This update may involve adjusting a rating of an existing similar question/answer pair based on the received rating. If the rating exceeds a predetermined threshold, the processor may store the query and the provided answer or generated response as a new rated question/answer pair in the first vector database. This feature allows the method to continuously refine its knowledge base based on operator feedback, thereby improving the relevance and accuracy of future responses.

In a preferred embodiment, referring to Table. 3, the rules for handling user feedback, such as incrementing or decrementing the rank of an existing record based on a "Like" or "Dislike" action from the user are stored in a ruleset table. In this embodiment, preferably, the ruleset includes an "extended rating" mechanism that acts as an impact rating, incrementing or decrementing the rating by a higher value (e.g., 5) or a lower value (e.g. -1) compared to the standard rating. For instance, if the answer is already ranked before as "like" from one machine operator and another machine operator "dislikes" the answer, the ranking of this question/answer pair is updated by assigning -1 value to the ranking, or if an answer is not ranked before, and a machine operator dislikes the answer for the first time, this question/answer pair is logged for further investigation. This feature may allow the method to dynamically adjust the priority of responses based on operator feedback, thereby enhancing the system's ability to provide timely and relevant responses to operator queries.

In another embodiment, the system is implemented as a non-transitory computer-readable storage medium storing instructions. These instructions, when executed by a processor, cause the processor to perform the method for providing context-aware support to a machine operator. The non-transitory computer-readable storage medium includes any suitable type of storage medium, such as a hard drive, a solid-state drive, a flash memory, or other suitable storage medium.

The system and method described herein has broad industrial applicability across various manufacturing and production environments. While the examples provided focus on machine operation in industrial settings, the system's adaptable architecture allows for implementation in diverse sectors such as automotive manufacturing, aerospace, chemical processing, food production, and pharmaceuticals. The system's ability to provide real-time support can significantly enhance operational efficiency, reduce downtime, and improve safety in any industrial setting where complex machinery is operated. Furthermore, the principles and techniques of this system could be extended to other domains requiring intelligent decision support, such as healthcare diagnostics, financial analysis, or customer service operations. The flexibility of the system's design allows for customization to meet the specific needs of different industries and use cases, making it a versatile tool for improving operational performance and knowledge management across a wide range of industrial applications.

Independent of the grammatical term usage, individuals with male, female or other gender identities are included within the term.

## Claims

1. A multi-stage knowledge retrieval machine operator system to assist machine operators in an industrial setting comprising:
a large language model;
a first vector database storing question/answer pairs,
a second vector database storing embeddings of domain-specific and/or a particular machine specific documents chunks,
a graphical user interface for receiving queries from a machine operator and displaying responses; and
a processor,
wherein the system is configured to;
receive a query from the machine operator via the graphical user interface,
search the first vector database for similar question/answer pairs,
if a similar question/answer pair is found, provide the answer to the machine operator via the graphical user interface,
if no similar question/answer pair is found, search the second vector database for relevant document chunks,
generate a response using the large language model based on the relevant document chunks, and
provide the generated response to the machine operator via the graphical user interface.

2. A system according to Claim 1, **characterized in that** wherein the system is further configured to receive a rating or feedback for the provided answer or generated response from the machine operator via the graphical user interface, and update the first and/or the second vector database based on the received rating or feedback.

3. The system according to Claim 2, wherein the system is configured to update the first vector database by storing the query and the provided answer or generated response as a new rated question/answer pair if the rating exceeds a predetermined threshold or adjusting a rating of an existing similar question/answer pair based on the received rating.

4. A system according to any of the preceding claims, **characterized in that** the system is configured to retrieve information from both the first and the second vector databases simultaneously if no similar question/answer pair is found.

5. A system according to any of the preceding claims, **characterized in that** the system is configured to extend the large language model with specific domain knowledge through the use of vector embedding models.

6. A system according to any of the preceding claims, **characterized in that** the system is configured to allow the users dynamically to add additional documents to the second vector database or question/answer pairs to the first vector database.

7. A system according to any of the preceding claims, **characterized in that** the system is configured to receive a request from the machine operator for a new generation, or the system automatically generates new answers based on the information provided in the domain-specific documents stored in the second vector database.

8. A system according to any of the Claims 2-7, **characterized in that** the system is configured to use the feedback or rating received from the machine operator to adjust the weighting of the rated question/answer pairs.

9. A system according to any of the preceding claims **characterized in that** the system is configured to be implemented in a cloud-based environment.

10. A system according to any of the preceding claims **characterized in that** the system comprises a database which comprises a table of question identifiers and relation identifiers.

11. A system according to Claim 10 **characterized in that** the table comprises relation identifiers along with their associated answers and numerical rank values.

12. A system according to Claim 11 **characterized in that** the system is configured to link questions with their corresponding answers and ranks.

13. A system according to any of the Claims 10-12 **characterized in that** the system comprises a ruleset table which defines the rules for handling user feedback, such as incrementing or decrementing the rank of an existing or non-existing record based on a "Like" or "Dislike" action from the user.

14. A system according to Claim 13, **characterized in that**, the ruleset table includes an extended rating mechanism that acts as an impact rating, incrementing or decrementing the rating by a higher value or a lower value compared to the standard rating.

15. A multi-stage knowledge retrieval machine operator method to assist machine operators in an industrial setting comprising the steps of:
receiving a query from a machine operator via a graphical user interface,
searching the first vector database for similar question/answer pairs by a processor,
providing the answer to the machine operator via the graphical user interface if a similar question/answer pair is found,
if no similar question/answer pair is found, conducting a similarity search in the second vector database for relevant document chunks by the processor,
generating a response using the large language model based on the relevant document chunks, and
providing the generated response to the machine operator via the graphical user interface.
